# EUROPEAN PATENT APPLICATION

(11) **EP 1 233 616 A1**
(43) Date of publication of application: **21.08.2002**
(21) Application number: 00970039.4
(22) Date of filing: 24.10.2000
(51) Int. Cl.: H04N 5/64, G09F 9/00, G03B 21/00

(54) **HEAD-MOUNTED DISPLAY SYSTEM**

(30) Priority: 15.11.1999 JP 32469499; 14.06.2000 JP 2000177990
(71) Applicant: Olympus Optical Corporation Limited, Tokyo 151-0072 (JP)
(72) Inventor: HANAYAMA, Ryotaro, Sagamihara-shi, Kanagawa 229-1133 (JP); MIYAIRI, Nobuo, Fujinomachi, Tsukui-gun, Kanagawa 199-02 (JP); ISHIZAWA, Takanori, Tachikawa-shi, Tokyo 190-0001 (JP)
(74) Representative: Winter, Brandl & Partner
(86) International application number: JP0007434
(87) International publication number: WO01037558

(57) **Abstract**

A head mounted display system connects a portable information terminal (100) and a head mounted display device (1) to each other through a PC card (200). To the PC card (200) is provided a second connector (204) for supplying power and a signal from the outside which are different from power and a signal from an internal bus of the PC card (200), separately from a first connector (205) of the PC card, and power and a signal to the head mounted display device (1) are collectively supplied by a main cable (66) connected to the first connector (205).

## Description

### Technical Field

The present invention relates to a head mounted display system, and more particularly to a head mounted display system further comprising an intelligent interface which connects an information processing unit and a head mounted display device with each other through a signal converter.

### Background Art

In recent years, there have been proposed various kinds of head mounted display devices with which pictures in a big screen can be readily enjoyed. The present applicant has also realized a head mounted display device which intends reduction in weight and realization of high quality by using free shaped surface prism.

Such a head mounted display device projects a picture onto an eye ball of a user by a built-in LCD or optical system, and generates sounds in an ear of the user by an attached earphone or the like. A video signal or an audio signal can be obtained from a video source such as a television, a video cassette recorder or a DVD player connected to the head mounted display device.

There have been proposed various kinds of systems which use such a head mounted display device as a display device which displays an image obtained by office automation equipment such as a personal computer or a word processor.

Further, as the head mounted display device, one which displays a picture in both eyes of a user and another one which displays a picture on any one of the eyes. However, there have been proposed various kinds of devices as the latter one-eye display type device.

As such a device, for example, Jpn. Pat. Appln. KOKAI Publication No. 4-58212 discloses a display for an office automation equipment, the display comprising: an image projection device; an optical path changing member arranged so as to direct image display light outgoing from the image projection device in a predetermined direction; and a head mounted member which supports the image projection device and the optical path changing member, the image projection device including: optical image displaying means having a display plane which displays an image corresponding to an output signal from an office automation apparatus main body; and an optical member which projects the image display light outgoing from the display plane toward the optical path changing member. This display for an office automation apparatus is configured to be capable of appropriately maintaining the distance between the eyes and display image.

Furthermore, Jpn. Pat. Appln. KOKAI Publication No. 10-74051 discloses a head mounted display device comprising image displaying means, and holding means which holds the image displaying means and can be mounted on the head of a user. Image display light emitted by the image displaying means is led to one eye of a user. The holding means is configured to be capable of holding the image displaying means on either the right side or the left side of the head. In this device, the image displaying means is attachable/detachable with respect to supporting means. When the device is used for the right eye, the image displaying means is attached to the right side of the supporting means. When the device is used for the left eye, the image displaying means is removed from the supporting means, and then attached to the right side of the supporting means.

In such a device, however, the operation for switching from one eye to the other eye, namely, the operation for attaching/detaching the image displaying means to/from the supporting means is troublesome, and means for attaching/detaching the image displaying means to/from the supporting means is complicated, which is a factor of increasing the manufacturing cost.

Jpn. Pat. Appln. KOKAI Publication No. 10-123455 discloses a head mounted display device comprising: image displaying means; and a holding means which holds the image displaying means and can be put on the head of a user, the image displaying means including: means for emitting image display light toward the front of a user; an arm which extends from one side to the front side of the user; and an optical element attached to a front end of the arm, an optical path of the image display light being changed by the optical element and led to a pupil of the user. The optical element is connected to the arm so as to be capable of being displaced so that the optical element escapes from external force acting from the front side.

Jpn. Pat. Appln. KOKAI Publication No. 10-75408 discloses a head mounted display device comprising: image displaying means; and holding means which holds the image displaying means and can be put on the head of a user, the holding means having: a support member; and at least four pad members connected to the support member, the support member being capable of being elastically deformed in such a manner that elastic force for pressing these members to positions distanced in the front-and-back direction on the right side of the head of the user and positions distanced in the front-and-back direction on the left side of the head can act.

Jpn. Pat. Appln. KOKAI Publication No. 10-39784 discloses a head mounted display device comprising: means for emitting image display light; optical path changing means arranged in front of a user; and holding means which holds the means for emitting the image display light and the optical path changing means and can be put on the head of the user, the optical path changing means being capable of changing an optical path of the image display light in such a manner that a virtual image of an observation target can be formed in front of a user, wherein the means for emitting the image display light and the optical path changing means are connected to the holding means so as to be capable of integrally moving along a spherical surface, and the center of the spherical surface is arranged at a position adjacent to the user rather than the optical path changing means.

Jpn. Pat. Appln. KOKAI Publication No. 8-305298 discloses a head mounted display device mounted on the head of a user, the device comprising: an image display portion; and a head mounted holding portion which holds the display portion, wherein, when the head mounted display device is mounted on the head of the user, an image obtained by the display portion is outside a visual range if a visual line direction of the user is a front direction, the same is within the visual range when the visual line direction is any direction other than the front direction, and constituent parts of the head mounted display device are substantially outside the visual range if the visual line direction of the user is the front side.

Jpn. Pat. Appln. KOKAI Publication No. 8-320453 discloses a display device mounted on a user, the display device comprising: an image display portion; and a holding portion which holds the display portion, wherein a display position of an image can be changed within a visible range of the user.

In recent years, systems which execute input of a sentence, operation commands or the like by voices in a personal computer or the like have come to market, and a headset or the like is mounted on a head in order to input voices, for example.

The headset has a configuration that right and left ear covers are connected to each other by, e.g., a head band, an arm portion extends from the side portion of one of these ear covers and a microphone is attached to an end of the arm portion.

Such a headset uses the arm to position the microphone in front of a mouth of a user. Therefore, the arm extends to the front side of a face, and the size of the device increases, which is a factor of the troublesome manipulation or the sense of discomfort when attached. Thus, directly applying the structure of attaching the microphone through the arm to the head mounted display device is not necessarily the best means.

Jpn. Pat. Appln. KOKAI Publication No. 11-265248 discloses a head mounted display device comprising: a display portion which displays an image in front of an eye; and connecting means capable of receiving information of an information processing unit. This device can be connected to the information processing unit through a cable. In this case, the connecting means is constituted by a connector connected to a D-sub 15-pin connector for an external display of the information processing unit, and a cable connecting this connector with the head mounted display device. Moreover, this device can be wirelessly connected to the information processing device. In this case, a signal is transmitted from an infrared port (IrDA standard) of the information processing unit to the head mounted display device.

However, since the head mounted display device including such connecting means can not supply power from the information processing unit to the head mounted display device, it needs a power supply built therein or another cable connected to an external power supply. When the built-in power supply is required, reduction in size and weight is difficult, and the wearable property is deteriorated. When another cable is necessary, the wearable property is likewise deteriorated. In addition, a signal transmitted from the information processing unit through a VGA connector such as a D-sub 15-pin connector is processed in the head mounted display device, a circuit used for processing signals is mounted on the head mounted display device. Such a structure is not appropriate for reduction in size and weight, thereby deteriorating the wearable property.

Additionally, a viewer portion which displays a picture and leads it to an eye of a user must keep a predetermined positional relationship with respect to the eye even if the head is slightly moved. If this relationship is not sufficiently maintained, a picture to be observed wobbles or a distance to the eye is changed, which can be a factor of generating the sense of discomfort. Thus, a technique for assuredly supporting the viewer portion relative to the eye is required.

The present applicant has precedently proposed a head mounted display device (Jpn. Pat. Appln. No. 11-312169) which is small in size and has the excellent wearable property. In this device, display controlling means is not included on the viewer side in order to reduce size and weight, and the weight is further decreased by performing display control based on control by the display controlling means on the PC side. For example, as to a connection interface between an information processing unit such as a wearable PC and the viewer, a dedicated liquid crystal digital interface (for example, GVIF) is used so that these members are connected to each other.

In order to connect the viewer to a notebook computer or the like, the interface must be used therebetween. As such an interface, there are a PC card expansion adaptor or a conversion adaptor connected to a VGA connector provided to an all-purpose general notebook computer, for example.

Further, when trying to supply power to a data viewer by using a prior art PC card, the power is supplied through a card bus. The power that the card bus can supply depends on the power supply capability of a card bus controller IC, and the power is not enough for the data viewer which consumes the large power if the power is supplied only from the PC card. Therefore, a cable for supplying the power to the data viewer is required besides a signal cable, thereby deteriorating the wearable property of the data viewer.

Accordingly, it is an object of the present invention to provide a head mounted display system which has the excellent wearable property when connecting a general-purpose information processing unit to a head mounted display device.

### Disclosure of Invention

A head mounted display system according to the present invention comprises an information processing unit and a head mounted display device, and is characterized in that
the head mounted display system includes at least one of a signal converter and a power converter, and
the head mounted display system further comprises an intelligent interface which connects the information processing unit and the head mounted display device to each other.

The head mounted display system according to the present invention is characterized in that at least one path along which a signal is transmitted and at least one path along which power is transmitted are connected to the intelligent interface, and
the path along which a signal is transmitted and which connects the intelligent interface and the head mounted display device to each other, and the path along which power is transmitted and which connects the intelligent interface and the head mounted display device to each other are constituted by one main cable.

The head mounted display system according to the present invention is characterized in that the path along which a signal is transmitted and which connects the intelligent interface and the information processing unit to each other, and the path along which power is transmitted and which connects the intelligent interface and the information processing unit to each other are connected to the bus controller of the information processing unit.

The head mounted display system according to the present invention is characterized in that the intelligent interface is a PC card including a first connector to which a main cable is connected, and a second connector to which the path along which a signal is transmitted and the path along which power is transmitted are connected, and
the information processing unit includes a PC card slot to which the PC card is inserted.

The head mounted display system according to the present invention is characterized in that the PC card is supplied with at least one of power and a signal through the second connector.

The head mounted display system according to the present invention is characterized in that both the head mounted display device and the PC card is supplied with at least one of power and a signal, from the outside of the PC card, through the second connector.

The head mounted display system according to the present invention is characterized in that the second connector is connected to one of a USB connector, a PS/2 connector and an IEEE1394 connector.

The head mounted display system according to the present invention is characterized in that the head mounted display device includes
an image display mechanism and
a support mechanism which supports the image display mechanism and can be put on the head of a user, and
when the support mechanism is put on the head, the image display mechanism corresponds to only one eye of the user and an image display light emitted by the image display mechanism is led to the eye, and
the image display mechanism is supported by the support mechanism so as to be capable of swiveling, so that the image display mechanism can selectively take a position corresponding to one eye of the user and a position corresponding to the other eye when the support mechanism is put on the head of the user.

The head mounted display system according to the present invention is characterized in that the head mounted display system includes
an image display mechanism including a viewer portion which emits image display light and an arm portion which supports the viewer portion on one end side of the an arm portion, and
a support mechanism which supports the arm portion on the other end side of the arm portion and can be put on the head of a user,
the arm portion being supported by the support mechanism so as to be capable of swiveling among a central position, a first position swiveled from the central position by approximately 90° and a second position swiveled from the central position by approximately -90°,
when the support mechanism being put on the head of a user, the viewer portion corresponding to one eye of the user at the first position and the viewer portion corresponding to the other eye at the second position.

The head mounted display system according to the present invention is characterized in that the support mechanism includes
a tabular member having a shape corresponding to a shape of the head on which the support mechanism is put,
a first ear cover portion provided at one end of the tabular member, and
a second ear cover portion provided at the other end of the tabular member, and
the image display mechanism is supported by the first ear cover portion so as to be capable of swiveling.

The head mounted display system according to the present invention is characterized in that the image display mechanism includes a mechanism which automatically rotates an image to be displayed by 180° in response to swiveling of the image display mechanism.

### Brief Description of Drawings

FIG. 1 is a schematic view showing a head mounted display system according to a first embodiment of the present invention;
FIG. 2 is a block diagram showing a portable personal computer;
FIG. 3 is a block diagram showing a head mounted display device;
FIG. 4 is a perspective view showing an example of the head mounted display device;
FIG. 5 is a view showing from the above how the head mounted display device illustrated in FIG. 4 is put on the head;
FIG. 6 is an enlarged cross-sectional view showing a structure of a viewer portion of the head mounted display device illustrated in FIG. 4;
FIG. 7 is an enlarged cross-sectional view showing a structure of an LCD frame portion of the head mounted display device illustrated in FIG. 4;
FIG. 8 is an enlarged longitudinal cross-sectional view showing structures of the LCD frame portion and a main prism portion of the head mounted display device illustrated in FIG. 4;
FIG. 9 is a view showing a structure of an electric circuit board arranged in the head mounted display device illustrated in FIG. 4;
FIG. 10 is an exploded perspective view showing a structure for fixing the main prism and a see-through prism of the head mounted display device depicted in FIG. 4;
FIG. 11A is a cross-sectional view showing an example of an elastic member of the head mounted display device illustrated in FIG. 4;
FIG. 11B is a cross-sectional view showing another example of the elastic member of the head mounted display device depicted in FIG. 4;
FIG. 11C is a cross-sectional view showing still another example of the elastic member of the head mounted display device illustrated in FIG. 4;
FIG. 11D is a cross-sectional view showing yet anther example of the elastic member of the head mounted display device depicted in FIG. 4;
FIG. 12 is a view showing the state of a picture displayed with being superposed on external light by the head mounted display device illustrated in FIG. 4;
FIG. 13 is a cross-sectional view showing structures of an oscillation mechanism and a sliding mechanism provided to an arm portion of the head mounted display device illustrated in FIG. 4;
FIG. 14 is a perspective view showing how another example of the head mounted display device is mounted;
FIG. 15 is a block diagram showing another example of the PC card;
FIG. 16 is a block diagram showing still another example of the PC card;
FIG. 17 is a block diagram showing yet another example of the PC card;
FIG. 18 is a block diagram showing a further example of the PC card;
FIG. 19 is a block diagram showing a still further example of the PC card;
FIG. 20 is a block diagram showing a yet further example of the PC card;
FIG. 21 is a block diagram showing another example of the PC card;
FIG. 22 is a block diagram showing still another example of the PC card;
FIG. 23A is a view showing a structure of an alternative example of the head mounted display device depicted in FIG. 14;
FIG. 23B is a view showing a structure of another alternative example of the head mounted display device illustrated in FIG. 14;
FIG. 23C is a view showing a structure of yet another alternative example of the head mounted display device depicted in FIG. 14; and
FIG. 24 is a schematic view showing a head mounted display system according to a second embodiment of the present invention.

### Best Mode for Carrying Out of the Invention

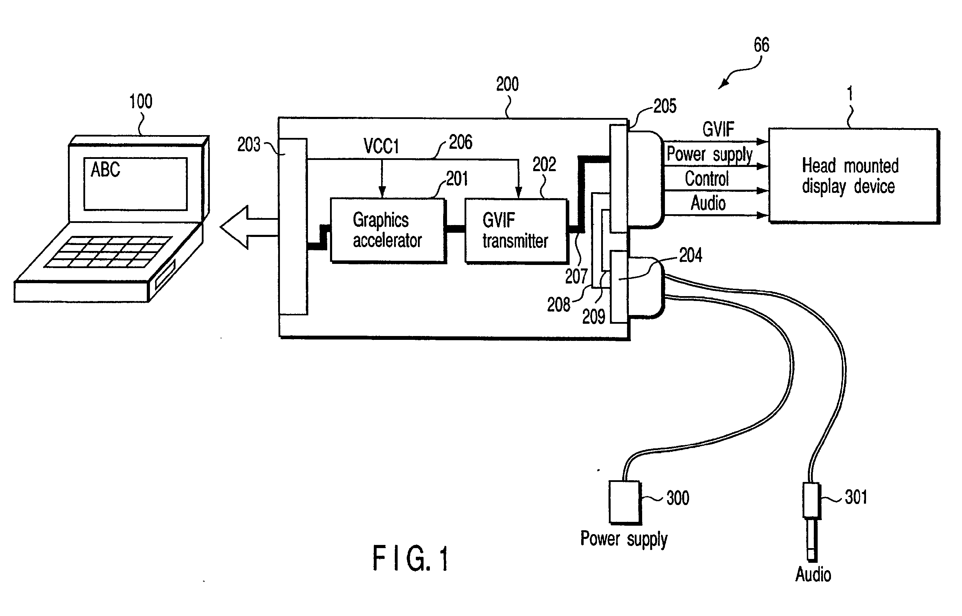

A first embodiment according to the present invention will now be described hereinafter with reference to the accompanying drawings. As shown in FIG. 1, a portable personal computer 100 used as an information processing unit and a head mounted display device 1 are connected to each other through a PC card 200 used as an intelligent interface.

Here, the intelligent interface refers to an interface which connects the information processing unit and the head mounted display device with each other through at least one of a signal converter and a power converter.

The PC card 200 is constituted by: a graphics accelerator 201 which controls display of the head mounted display device 1; a GVIF transmitter 202 which is a signal converter used for performing parallel-to-serial conversion of an image data signal from the graphics accelerator 201, generates GVIF signal format, and transmits the signal; a slot side connector 203 inserted into a PC card slot on the PC side; a second connector 204 to which is connected a power supply 300 and an audio 301; and a first connector 205 to which is connected the head mounted display device 1. Power of 5 V or 3.3 V is supplied to the graphics accelerator 201 and the GVIF transmitter 202 from the connector 203 on the PC card slot side through a power supply signal line 206. The GVIF transmitter 202 is connected to the first connector 205 through a bus 207 consisting of a signal line and a power supply line (3.3 V). The second connector 204 is connected to the first connector 205 through a power supply line (5 V) 208 and an audio signal line 209. The power and the signal transmitted through the bus 207, the power supply line (5 V) 208 and the audio signal line 209 are supplied to the head mounted display device 1 via the connector 205 and a main cable 66 connected to the connector 205. That is, to the PC card 200 are connected two paths along which a signal is transmitted (a path extending through the connector 203 and a path extending through the audio signal line 209) and two paths along which power is transmitted (a path extending through the connector 203 and a path connecting the power supply 300 with the second connector 204).

For example, the power of approximately 5 V and 0.5 A can be supplied to the head mounted display device 1 from the second connector 204, and the operation of the device beyond the power consumption of the PC card is enabled.

The PC card 200 has a function as an image processing board. The PC card 200 converts image data into a digital signal having a GVIF format and outputs it to the head mounted display device 1.

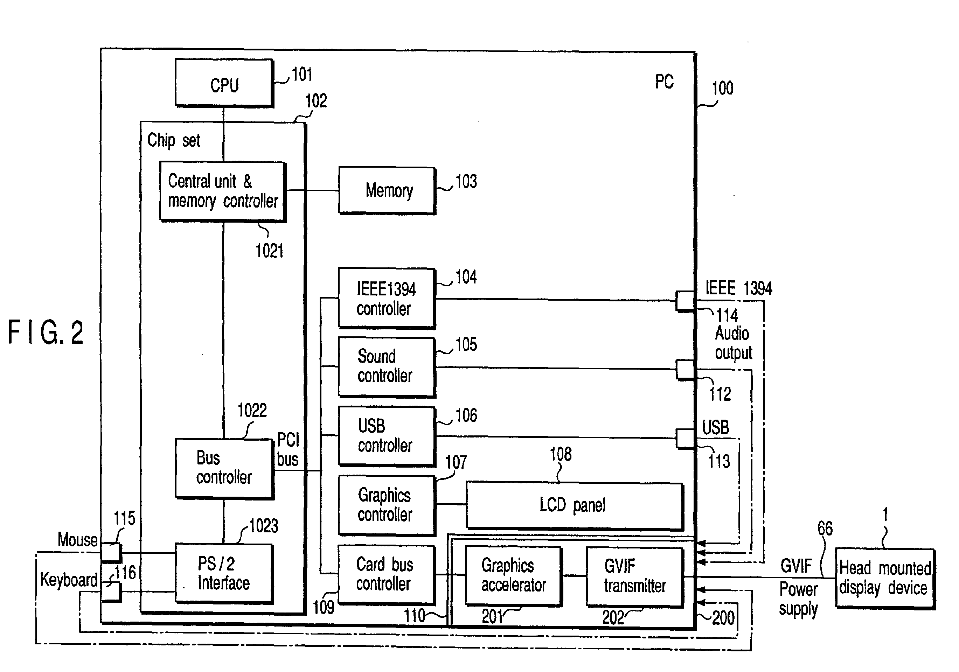

FIG. 2 is a view showing a structural example of the portable personal computer (which will be referred to as a portable PC hereinafter). This portable PC 100 is basically a device operated with an OS (operating system) which can use a USB interface or an interface such as an IEEE1394.

The portable PC 100 includes: a CPU 101; a chip set 102 having a central unit & memory controller 1021, a bus controller 1022 and a PS/2 interface 1023; a memory 103; an IEEE1394 controller 104; a sound controller 105; a USB controller 106; a graphics controller 107; an LCD panel 108; a card bus controller 109; and a PC card slot 110 in which a PC card 200 having a graphics accelerator 201 and a GVIF transmitter 202 is inserted.

Further, as a connector terminal to which various kinds of devices are connected, the portable PC 100 includes an audio output terminal 112, a USB connector 113, an IEEE1394 connector 114 (for example, a 6-pin terminal capable of supplying power), a mouse connector 115 and a keyboard connector 116.

Incidentally, as a computer to which this embodiment is applied, it is not necessary to include all of these connectors. For example, the USB connector 113 or the IEEE1394 connector 114 may be selectively provided.

As the power supply 300, an AC adaptor or a battery may be used. However, it needs to supply power of approximately 5 V and 0.5 A. Furthermore, appropriately combining with driver software can assure power supply from the interface connector such as the USB connector 113, the IEEE1394 connector 114, the PS/2 mouse connector 115, the keyboard connector 116 and others in the main body of the PC 100. In this case, to the PC card 200 are connected at least two paths along which power is transmitted (a path running through the connector 203, a path connecting the power supply 300 with the second connector 204, and a path connecting the USB connector 113, the IEEE1394 connector 114, the PS/2 mouse connector 115, the keyboard connector 116 and others with the PC card 200). At least one of the four paths indicated by dotted lines in FIG. 2 is selected as a path along which power is transmitted.

The paths are connected to the bus controller 1022 through controllers 104, 105, 106 and 109 and a PS/2 interface 1023, respectively.

Although assuming that the audio signal line 209 is connected to the audio output terminal 112 of the main body of the PC 100, this line may be connected to any other signal source (for example, a CD player or a DVD player).

As described above, in the above embodiment, the PC 100 and the head mounted display device 1 can be connected to each other through only one signal cable. That is, the path along which a signal is transmitted and which connects the PC card 200 and the head mounted display device 1 to each other, and the path along which power is transmitted and which connects the PC card 200 and the head mounted display device 1 to each other are constituted by one main cable 66.

Therefore, the cable for supplying power to the display device 1 and the audio cable are no longer necessary, and the small head mounted display system with the excellent wearable property can be constituted.

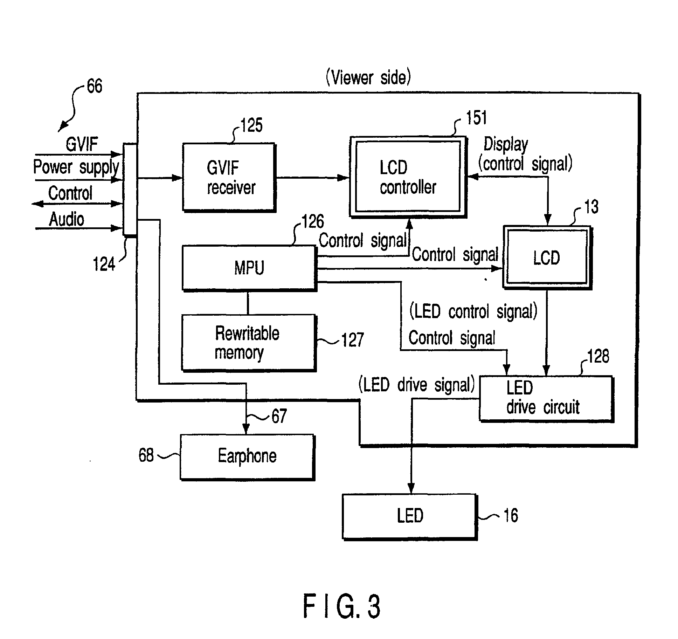

FIG. 3 is a detailed circuit block diagram showing the head mounted display device 1. The head mounted display device 1 is connected to the PC 100 through the PC card 200 including at least the graphics accelerator 201 and the GVIF transmitter circuit 202, and These constitute the head mounted display system. Further, the display device 1 demonstrates the display capability corresponding to SVGA (800 × 600), and can display an image equivalent to that displayed in the LCD panel 108 of the PC 100.

The head mounted display device 1 includes: a GVIF receiver circuit 125 which transmits/receives data to/from the PC 100 through the connector 124; the LCD controller 151 which carries out display control over the LCD 13 in response to data subjected to serial-to-parallel conversion in the circuit 125; an LCD 13 which control by the LCD controller 151 to display data; an LED drive circuit 128 which drives the LED 16 upon receiving an LED control signal of the LCD 13; an MPU 126 which controls the entire viewer portion; and a rewritable memory 127 which stores therein firmware or the like for controlling display of the viewer.

Parallel-to-serial conversion is executed in the GVIF transmitter circuit 202 by display control by the graphics accelerator 201, and display data is received by the GVIF receiver circuit 125 of the display device 1 through one main cable 66 in which the power signal, image signal, sound signal and control signal are arranged. In the receiver circuit 125, serial-to-parallel conversion is executed, and the display data is supplied to the LCD controller 151.

Furthermore, the rewritable memory 127 stores therein initial data of the MPU 126, the LCD controller 151 and the LCD 13, user setting data such as brightness, picture contrast and others, information required for display control, or the like. The rewritable memory 127 is constituted by an EPROM, an EEPROM, a flash EEPROM or the like, and is rewritable. By opening a cover of the viewer portion and rewriting with the operation interface, or by using the memory device having a plug in order to entirely replace the memory device, the firmware for display control can be updated. Also, without opening the cover of the display device 1, by means of control on the PC 100 side, the rewritable memory 127 can be rewritten by operating an IPL (Initial Program Loader) of the memory 127 using the install program.

Although the rewritable memory 127 is provided separately from the MPU 126 in the example of FIG. 3, the MPU 126 may include the memory 127.

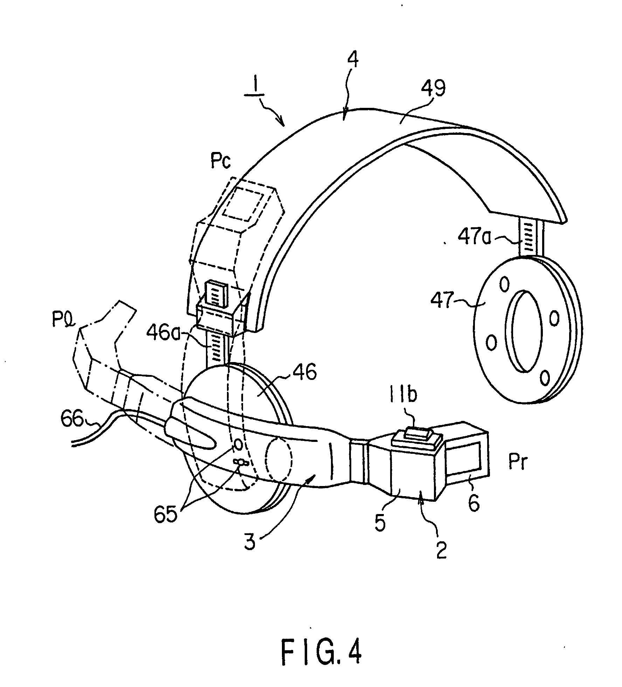

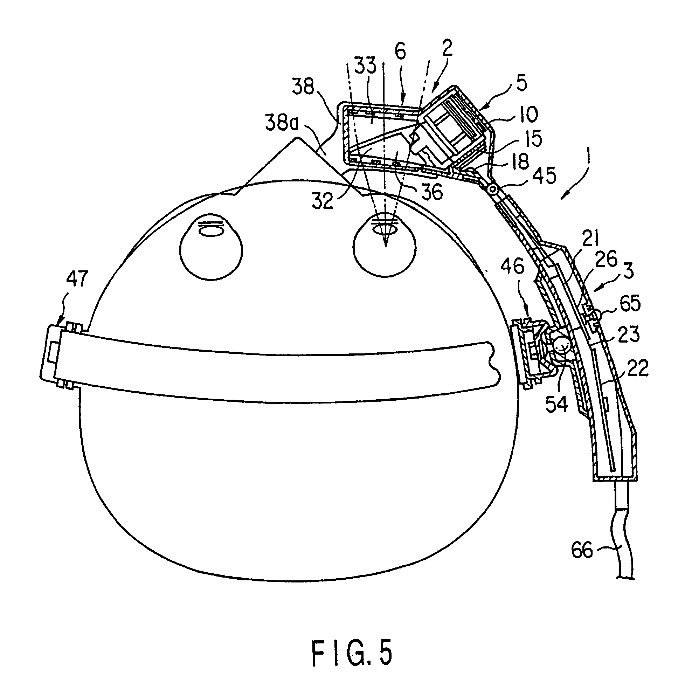

As shown in FIGS. 4 and 5, the head mounted display device 1 has an image display mechanism constituted by, for example, the viewer portion 2 which displays image information from the portable PC 100 as an optical image, superposes external light on the displayed image and displays it, and the arm portion 3 which supports the viewer portion 2 at an end thereof so as to be capable of swiveling and includes a later-described main board. Moreover, the image display mechanism is attached to a headphone type support mechanism 4 constituted by first and second ear cover portions 46 and 47, adjustment mechanisms 46a and 47a and a tabular member 49. That is, the arm portion 3 is supported by the first ear cover portion 46 at the base end portion and can swivel around the first ear cover portion 46. As a result, with the pivot point relative to the ear cover portion 46 as the center, the arm portion 3 can selectively swivel among a first position Pr (Pr is an appropriate position for the right eye) indicated by a solid line, a central position Pc which is distanced from the position Pr by approximately 90 degrees and indicated by a broken line and a second position P1 (appropriate position for the left eye) which is distanced from the central position Pc by approximately 90 degrees and indicated by a chain line. That is, the arm portion 3 can swivel among the central position Pc, the first position Pr corresponding to the right eye which is swiveled from the central position Pc by approximately 90° or preferably in a range of 45° to 135°, and the second position P1 corresponding to the left eye which is swiveled from the central position Pc by approximately -90° or preferably in a range of -45° to -135°. In addition, at the positions, the arm portion 3 is set to be stably maintained by a non-illustrated locking mechanism, for example, a clicking mechanism realized by engagement of a ball pressed by a spring and a concave portion. Incidentally, although the arm portion 3 can be manually swiveled in this embodiment, it may be automatically swiveled by using a motor or the like according to needs.

By swiveling the arm portion 3 180 around the ear cover portion 46, namely, the support mechanism 4 by approximately 180 degrees (90 degrees from the central position Pc in each of the clockwise direction and the counterclockwise direction), the system can be easily switched from the configuration for the right eye to the configuration for the left eye, for example. Holding the arm portion 3 by hand can manually carry out this switching operation, or it can be also effected by operating the switch of the swiveling mechanism such as a motor. Therefore, the operation can be extremely facilitated as compared with switching from the configuration for the right eye to the configuration for the left eye by attaching/detaching the arm portion, as disclosed in, e.g., Jpn. Pat. Appln. KOKAI Publication No. 10-074051. Additionally, the mechanism which causes the ear cover portion to support the arm portion 3 so as to be capable of swiveling can be easily configured.

The first ear cover portion 46 is attached to one end portion of the tabular member 49 of the support mechanism 4 through the adjustment mechanism 46a. Similarly, the second ear cover portion 47 is attached to the other end portion of the tabular member 49 through the adjustment mechanism 47a. The tabular member 49 is formed by an elastic member, for example, a metal plate so as to curve along the outline of the head. Incidentally, it is desirable that the first ear cover portion 46 and the second ear cover portion 47 have substantially the same structure, function and dimensions except that the first ear cover portion 46 supports the arm portion.

Similar to a regular headphone, the tabular member 49 of the support mechanism 4 is expanded against the elastic force, brought to the user's head, and put on the head by the returning force. At this moment, the positions of the first ear cover portion 46 and the second ear cover portions 47 can be adjusted by the adjustment mechanisms 46a and 47a so as to effectively cover the intended ear of a user.

The head mounted display device 1 having such a structure is used for superposing a display screen projected by the viewer and the external light and observing them. Further, as to sound, the head mounted display device 1 is used for providing sound for a user for either or both ears.

In FIG. 4, when the arm portion 3 is placed at the first position Pr which is swiveled by approximately 90 degrees in the clockwise direction from the central position Pc at which the arm portion 3 is parallel to the tabular member 49 of the support mechanism 4, a user can superpose the screen image and the external light and observe them by the right eye. Furthermore, when the arm portion 3 is placed at the second position P1 which is swiveled by approximately 90 degrees in the counterclockwise direction from the central portion Pc, the user can superpose the display image and the external light and observe them by the left eye. That is, in the state illustrated in FIG. 4, when the device is put on the head, the first ear cover portion 46 covers the right ear, and the viewer portion 2 is positioned in front of the right eye. Then, when the arm portion 3 is swiveled to the second position P1, the first ear cover portion 46 covers the left ear, and the viewer portion 2 is positioned in front of the left eye. It is to be noted that the arm portion 3 can swivel before and after putting the device on the head. Therefore, with the device being put on the head, if the user does not have to see the viewer portion 2, both eyes can be set free with the device being put by swiveling the arm portion 3 to the central position Pc.

Incidentally, as will be described later in detail, the image display mechanism is constituted so that the display screen projected by the viewer portion 2 is rotated by 180 degrees in cooperation with right and left switching of the viewer portion 2.

The detail of the image display mechanism will now be described. The image display mechanism is constituted by the arm portion 3 and the viewer portion 2. The viewer portion 2 has an LCD frame portion 5 and a main prism portion 6.

As shown in FIGS. 5 to 8, the LCD frame portion 5 is configured to include a reflecting type LCD 13, an LCD board 14 on which the LCD 13 is mounted, an LCD drive circuit board 15 mounting a drive circuit for the LCD 13 thereon, an LED 16 which emits illumination light rays of respective colors R, G and B to the LCD 13 in time series, an LED board 17 on which the LED 16 is mounted, and an illumination prism 28 which leads the light emitted by the LED 16 to the LCD 13, in a frame 10 as a frame member which forms a closed shape by a material such as metal through which the light does not pass, which rarely deforms in response to temperature or humidity and to which waterproof or dustproof measures, radio wave measures, heat release measure, or the like are taken.

Since the frame 10 is formed of a lightproof material such as metal, leak light of the LED can be provided and the light can be reflected with high reflectivity, thereby assuring high brightness. Further, when the frame 10 is formed of metal, heat release can be performed.

Incidentally, the LCD frame portion 5 is assembled as follows. A transparent window 31 is attached to a window frame portion 11a of a first frame 11. Then, the illumination prism 28, the LCD board 14, the LCD drive circuit board 15 or the like are assembled to the first frame 11. Subsequently, a second frame 12 is pressed against and combined with the first frame 11. As a result, these frames are integrated. The first frame 11 and the second frame 12 constitute the frame 10.

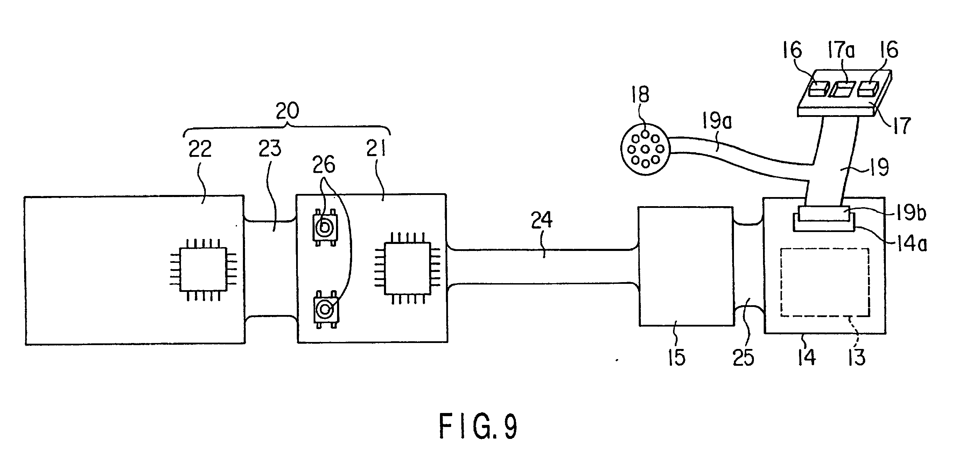

An electric circuit board provided in the head mounted display device 1 has a structure such as shown in FIG. 9. That is, the electric circuit board is configured to include: a main circuit board 20 in which two rigid boards 21 and 22 to which a video processing circuit for performing inversion of a picture or a control circuit for performing control according to operations of a plurality of mounted switches 26 is provided are connected through a flexible print-circuit board 23 or the like; an LCD drive circuit board 15 connected to the main circuit board 20 through the flexible print-circuit board 24; an LCD board 14 connected to the LCD drive circuit board 15 in proximity therewith through the flexible print-circuit board 25; an LED board 17 connected by linking a connector 19b arranged on one end side of the flexible print-circuit board 19 to a connector bearer 14a formed on the LCD board 14; and a microphone 18 connected to a branch 19a of the flexible print-circuit board 19.

Since the LED board 17 and the microphone 18 are connected to each other through a connecter, maintenance or troubleshooting can be readily carried out.

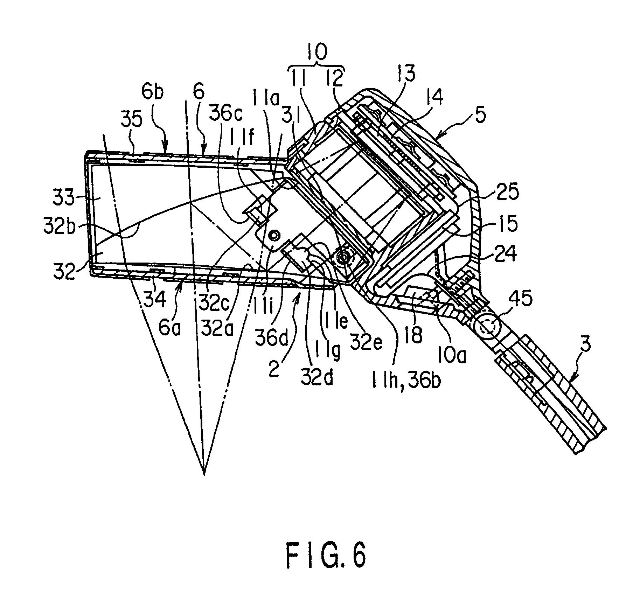

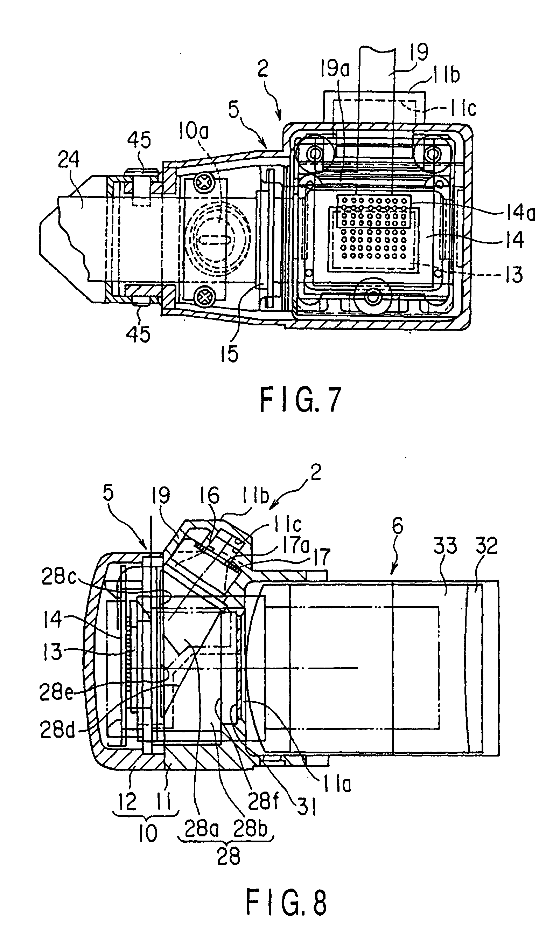

In the LCD frame portion 5, the LCD drive circuit board 15 and the LCD board 14 are arranged in such a manner that their main planes are substantially perpendicular to each other. The boards 14 and 15 are, as shown in FIGS. 6 and 7, provided in close proximity to each other. Namely, since the LCD 13 is driven by a signal having a relatively high frequency, reduction of the radiated high-frequency noise can be achieved by arranging the LCD board 14 in close proximity to the LCD drive circuit board 15.

Moreover, the microphone 18 is assembled in a microphone attachment portion 10a (see FIG. 7) provided at a position contiguous to the arm portion 3 on the side facing the head in the frame 10 of the LCD frame portion 5, i.e., the substantially intermediate position in the vertical direction. As a result, even if the head mounted display device 1 is used at any attachment positions where the right or left eye are used for observation, the microphone 18 can be placed at positions which are substantially symmetrical and equally distanced from the mouth of a user, thereby collecting the sounds in substantially the same state.

Consequently, since the microphone 18 does not separately protrude from the arm portion 3, the wearable property is improved, thereby enabling input of sounds with a simple structure. In addition, even if the utilization position is switched from left to right or vice versa, the microphone 18 can be arranged at substantially the same position, and hence the quality of sound to be inputted can be stabilized.

On the other hand, a plurality of switches 26 provided to the main circuit board 20 are respectively turned on/off by pressing button members 65 provided in the outer surface side of the arm portion 3 corresponding to switches 26.

The main cable 66 electrically connected to the rigid board 22 is led from the rear end surface of the arm portion 3.

Additionally, as shown in FIG. 9, a light transmission hole 17a is formed at the center of the LED board 17, and a pair of LEDs 16 is arranged on each side of this hole 17. Further, such a board 17 is attached at a part of a roof-like convex portion 11b of the first frame 11 as shown in FIG. 8. A scattering reflection plane 11c is formed on the part.

With such a structure, the illumination light emitted from both LEDs 16 is reflected by the scattering reflection plane 11c and uniformized, passes through the light transmission hole 17a and then enters an illumination prism 28 formed by attaching two triangular prisms 28a and 28b. The illumination light which has entered illumination prism 28 is sequentially reflected by a first reflection plane 28c and a second reflection plane 28d, outputted from a surface on the LCD side 28e and then illuminates the reflecting type LCD 13.

Since the LCD illumination light is caused to enter the reflecting type LCD 13 through the illumination prism 28, the product can be reduced in size as compared with the structure in which the illumination light directly enters.

Further, since the light from the LEDs 16 is once reflected and uniformed by the scattering reflection plane 11c and then illuminates the LCD 13, it is possible to take measures against irregularities of light emission of the LEDs 16 with the simple structure, and the optical loss can be also prevented. The light from the LEDs is caused to directly enter the illumination prism and the scattering reflection plane is provided to the illumination prism, the same advantages can be also obtained.

The LCD 13 controls the reflectivity of each pixel and reflects the light in cooperation with sequential irradiation of light rays of respective colors R, G and B. As the LCD, an Si-based liquid crystal (LCOS (Liquid Crystal On Sillicon)) is used, for example. The light reflected by the LCD 13 again enters the illumination prism 28 from the surface on the LCD side 28e. Subsequently, the light passes through the second reflection plane 28d and then goes out of an outgoing radiation plane 28f. The outgoing light enters a main prism portion 6 through the transparent window 31 attached appressed against the window frame portion 11a formed to the frame 10. As shown in FIG. 6, the main prism portion 6 is configured to include a main prism 32 and a see-though prism 33. In the main prism 32, the light flux from the LCD frame portion 5 enters and is reflected on a first reflection plane 32a and a second reflection plane 32b. Thereafter, this light flux goes out of the first reflection plane 32a and is led to an eyeball of a user through an ocular window 6a. The see-through prism 33 is constituted by being attached to the second reflection plane 32b of the main prism 32. In the see-through prism 33, the light from the outside which enters from an external light incoming window 6b is led to an eyeball of a user.

Furthermore, water repellent protection covers 34 and 35 to which the water repellent finishing is applied, on at least surfaces which can be the outer side surfaces, are respectively water-tightly fitted to the ocular window 6a and the external light incoming window 6b of the main prism portion 6, thereby coping with various environments where the device is used, e.g., the outdoor environment. The protection covers 34 and 35 may obtain the waterproof effect when a hard coating is applied, or an antireflection coating may be applied to the covers. Moreover, the protection covers 34 and 35 may be detachably held so that they can be replaced if they become stained or damaged.

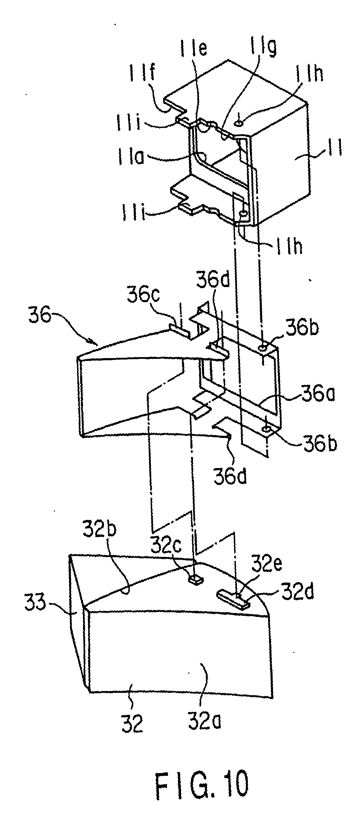

The main prism 32 and the see-through prism 33 are integrated by attaching their surfaces as described above. Of the prisms, to the main prism 32 are formed a first convex portion 32c for positioning and a second convex portion 32d for positioning having a protrusion 32e formed to the second convex portion 32d, on an upper surface and a lower surface of the main prism 32, as shown in FIG. 10.

The main prism portion 6 is fixed to the frame 10 of the LCD frame portion 5 by a sheet metal member 36. Then, only the main prism 32 is fixed by the sheet metal member 36, and the see-through prism 33 is fixed by the effect (jointing strength) obtained by attaching the see-through prism 33 and the main prism 32.

As shown in FIG. 10, the sheet metal member 36 is formed into a shape which substantially covers the upper and lower surfaces of the main prism 32. Two bent portions 36c and 36d which perform positioning by pressing the first convex portion 32c and the second convex portion 32d against the contact portions of the frame 10 are respectively provided to upper and lower parts of the sheet metal member 36.

Moreover, to the sheet metal member 36 are formed a window portion 36a through which the light flux entering from the LCD frame portion 5 passes and screw holes 36b for fixing to the frame 10 of the LCD frame portion 5.

The frame portion 10 is constituted by hermetically fitting the first frame 11 and the second frame 12 as described above. Of these frames, the first frame 11 is a box-like member to which the window frame portion 11a is formed. To the first frame 11 are formed two screw holes 11h formed at positions corresponding to the upper and lower screw holes 36b of the sheet metal member 36, upper and lower rectangular convex portions 11i which are inserted between the two bent portions 36c and 36d and carry out positioning, an end surface 11f which contacts with the first convex portion 32c of the main prism 32 for positioning, an end surface 11g which is brought into contact with the second convex portion 32d of the main prism 32 for positioning, and a convex portion 11e in which a protrusion 32e formed to the second concave portion 32d is fitted and which is used for positioning.

In such a structure, the main prism portion 6 is assembled as follows. The sheet metal member 36 is attached to the main prism 32. At this moment, the first and second convex portions 32c and 32d of the main prism 32 are brought into contact with the bent portions 36c and 36d of the sheet metal member 36. Further, the first frame 11 is assembled from the outer side of the sheet metal member 36. Then, the protrusion 32e of the second convex portion 32d of the main prism 32 is fitted in the concave portion 11e of the first frame 11. Thereafter, the first and second convex portions 32c and 32d are sandwiched by the bent portions 36c and 36d of the sheet metal member 36 and the end surfaces 11f and 11g of the first frame 11.

As a result, the upper and lower surfaces of the main prism 32 are sandwiched by the sheet metal member 36 and the main prism 32 is positioned in the vertical direction. In these surfaces, the main prism 32 is positioned in one direction when sandwiched between the bent portions 36c and 36d of the sheet metal member 36 and the end surfaces 11f and 11g of the first frame 11. In a direction crossing the former direction, the main prism 32 is positioned by fitting the protrusion 32e of the second convex portion 32d in the concave portion 11e formed on the end surface 11g of the first frame 11. Therefore, spatial arrangement is completely determined.

Subsequently, by commonly fastening the screws in the screw hole 11h of the first frame 11 and the screw hole 36b of the sheet metal member 36, these members are integrally fixed.

As described above, since only one prism (main prism 32) is fixed and the other prism (see-through prism 33) is held with the jointing strength, the stress applied to the prisms can be reduced as much as possible, thereby preventing damage. Furthermore, since the sheet metal member 36 and the fitting parts are combined, screws or the like do no have to be directly screwed to the prisms. Thus, the distortion or damage of the prisms can be prevented from being generated.

As shown in FIG. 5, it is possible to detachably cover and mount an elastic member 38 which is formed of, e.g., elastomer and constitutes the support member, on the outer surface of the above-described main prism portion 6. Since the elastic member is detachable, when a plurality of users share the same head mounted display device 1, good sanitary conditions can be maintained by replacing the elastic member for each user. Moreover, when replacement is required due to damage or stains, it is possible to easily cope with such replacements.

To the elastic member 38 are formed rectangular holes (not shown) at parts corresponding to the ocular window 6a and the external light incoming window 6b. As a result, the light can pass through the rectangular holes and enter the external light incoming window 6b. The elastic member 38 has a contact member 38a which comes into contact with a predetermined position on a face where the nasal bone exists under the skin in close proximity thereto and serves to prevent fluctuations in the main prism portion 6 at a position which is in a predetermined condition when the head mounted display device 1 is mounted.

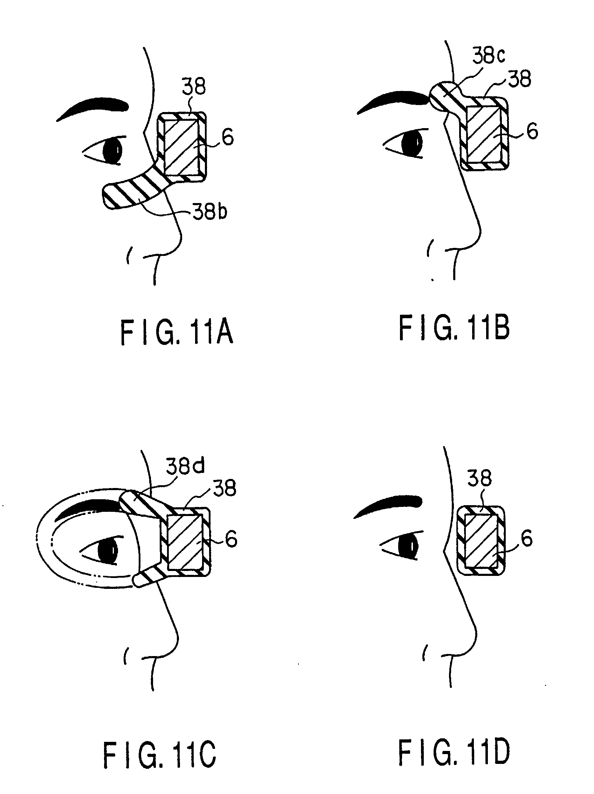

It is to be noted that the structure of the elastic member 38 is not restricted thereto. For example, as shown in FIG. 11A, the elastic member 38 may have the contact member 38b which comes into contact with a part where the cheekbone exists under the skin in close proximity thereto. In addition, as shown in FIG. 11B, the elastic member 38 may have the contact member 38c which comes into contact with a part where the bone above the eyes exists under the skin in close proximity thereto. The contact member 38c may be constituted as one or more members. Furthermore, as shown in FIG. 11C, the elastic member 38 may have the contact member 38d which is formed into a frame-like shape so as to surround the gap between the eyeball and the main prism portion 6 along the whole circumference. In this case, it is desirable that the inside dimension of the contact member 38d is set sufficiently larger than the human orbital height (for example, an average value of the orbital height is +3 to 4 σ (σ is a standard deviation)) and the contact member 38d is configured to be capable of coming into contact with the bone part around the orbit with respect to many users.

As described above, by using the contact members 38a, 38b and 38c which come into contact with the parts where the bone exists under the skin of the head in close proximity thereto, the pressure can be prevented from being applied to the eye ball and the eye ball can be protected even if the main prism portion 6 is accidentally pushed, and the head mounted display device 1 can be stably held.

Incidentally, the contact member 38 shown in FIG. 11C can prevent transmission of the external light other than that entering from the see-through prism 33, and the picture can be stably and clearly observed without being affected by the indoor or outdoor environment. Furthermore, the distance between the main prism portion 6 and the eyeball (or the distance to a virtual image) can be maintained substantially constant.

Moreover, by preparing the elastic member 38 having a shape covering the part in the vicinity of the outer frame of the eyeglasses, it is possible to cope with a user who wears glasses. Of course, there is an advantage that the sense of wearing can be improved with respect to a user who does not wear glasses. In addition, as shown in FIG. 11D, the elastic member 38 with no protrusion member may be attached to the main prism portion 6.

As described above, it is possible to flexibly cope with users with individual differences or utilization modes by preparing the elastic members having various shapes.

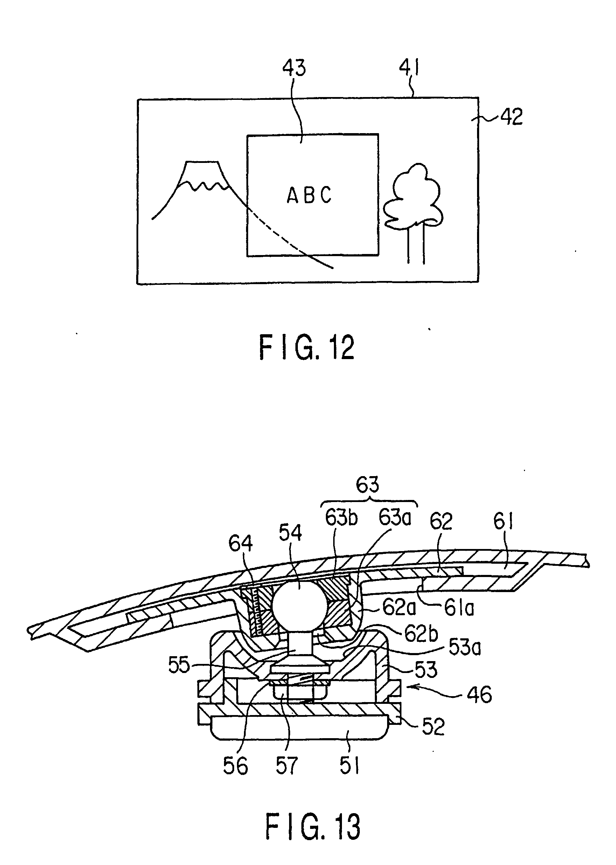

Additionally, for example, by preparing two kinds of elastic members 38, i.e., one having a window provided on the external light incoming side of the prism and the other one having a shape preventing transmission of the light and covering the external light incoming side, it is possible to use the device selectively for the occasion in which an LCD picture and the external light are superposed and observed or for the occasion in which only the LCD is observed, without providing a special external light shutout mechanism or the like. That is, in the case of observing with superposing the picture and the external light, the landscape 42 from the external light and the picture 43 displayed by the LCD 13 are superposed in the visual range 41 and observed as shown in FIG. 12. On the other hand, in the case of observing only the LCD picture, since the landscape by the external light is intercepted, the picture 43 displayed by the LCD 13 can be more clearly observed.

The viewer portion 2 having the above-described structure is supported in a plane substantially parallel to the arm portion 3 through a hinge 45 so as to be capable of swiveling, as shown in FIG. 6.

In the arm portion 3 is provided a main circuit board 20 constituted by joining the two rigid boards 21 and 22 through the flexible print-circuit board 23 or the like, as described above. By providing the boards 21 and 22 along the arm portion, the thickness of the arm portion 3 which curves along the shape of the head can be reduced even though the hard boards are used.

The arm portion 3 is supported so as to be capable of minutely adjusting a position of the arm portion 3 relative to the ear cover portion, namely, the support mechanism 4, through an oscillation mechanism consisting of a ball joint and a sliding mechanism consisting of a sliding member and a sliding groove portion. The oscillation mechanism and the sliding mechanism will now be described with reference to FIG. 13.

As described above, the arm portion 3 is attached to the support mechanism 4 through the first ear cover portion 46.

To the first ear cover portion 46 are provided a pad portion 51 which comes into contact with the head and a pad portion frame 52 which supports the pad portion 51. An exterior frame 53 to which a concave curved surface portion 53a is formed is fitted to the pad portion frame 52.

A shaft member 55 to which a ball 54 is attached at an end thereof is fixed to the exterior frame 53 through a washer 56 and a nut 57. The shaft member 55 protrudes from the bottom portion of the concave curved surface portion 53a of the exterior frame 53.

A sliding groove portion 61 is formed to the arm 3 on the side where the arm portion 3 faces the head. A sliding member 62 is fitted to the sliding groove portion 61 so as to be capable of sliding in the longitudinal direction of the arm portion 3.

A cup-like convex portion 62a facing the head side is formed in the middle of the sliding member 62. The cup-like convex portion 62a protrudes from a sliding window 61a formed to the sliding groove portion 61.

A through-hole 62b is formed to the cup-like convex portion 62a at an end thereof. A ball bearing 63 which supports the ball 54 is fixed inside the cup-like convex portion 62a.

The ball bearing 63 is constituted by combining a lower ball bearing member 63a and an upper ball bearing member 63b. Assembly is carried out as follows. The lower ball bearing member 63a is first fitted into the cup-like convex portion 62a. Then, the shaft member 55 is inserted from the through-hole 62b of the cup-like convex portion 62a, and the ball 54 is attached to the shaft member 55 on the end side by screwing or the like. Further, the upper ball bearing member 63b is fitted from the upper side and a screw 64 or the like is screwed in.

As described above, by providing three position adjustment mechanisms for adjusting a position of the viewer portion 2 relative to the eye ball, it is possible to perform, without restraint, swiveling around the hinge portion 45, adjustment of the forward protruding length of the arm portion 3 with respect to the support mechanism 4 by the sliding mechanism or adjustment of oscillation in an arbitrary direction around the ball 54 by the oscillation mechanism.

Since the viewer portion 2 can be adjusted to an arbitrary distance or angle, the device can be set at a desired position which is the best position for observation, with the good operability, with respect to a wide range of users having different head sizes or positions of eyes.

Incidentally, although the three position adjustment mechanisms are provided in the above example, it is possible to perform adjustment by two position adjustment mechanisms, or more adjustment mechanisms may be provided.

On the other hand, a plurality of switches 26 provided at the main circuit board 20 are respectively turned on/off by pressing the button members 65 provided in outer surface side of the arm portion 3 corresponding to the switches 26.

The main cable 66 which is electrically connected to the rigid board 22 is led from the rear end surface of the arm portion 3.

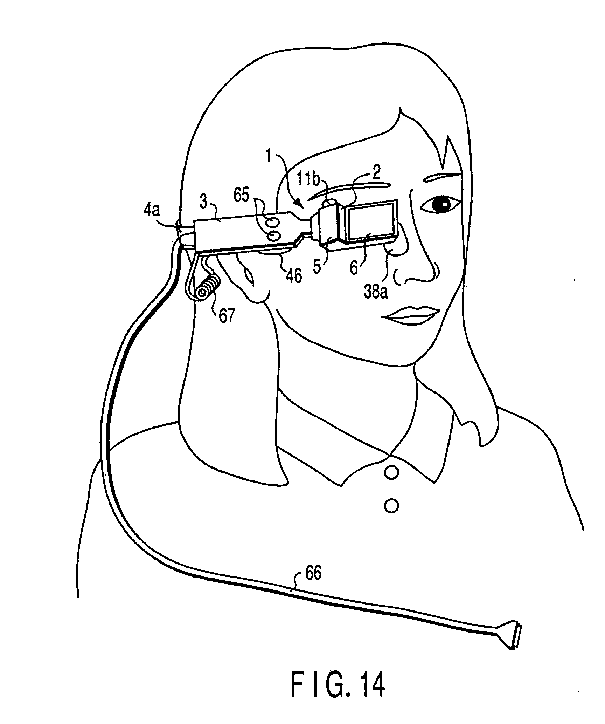

Another example of the head mounted display device 1 will now be described with reference to FIG. 14. Most parts of the structure in this example are equivalent to most parts of the structure of the head mounted display device 1 shown in FIG. 4. The difference from the structure of head mounted display device 1 of the FIG. 4 is in the structure of the support mechanism. The structure of the image display mechanism in this example is the same as that of the image display mechanism shown in FIG. 4. The support mechanism in this example has a tabular member 49a extending from the vicinity of both ears to the back of the head, and a plurality of pads (not shown) intervening between the tabular member 49a and the back of the head. The tabular member 49a holds the image display mechanism so as to be capable of oscillating and sliding.

The state in FIG. 14 shows how a user observes a picture by the right eye. However, as in the head mounted display device 1 of FIG. 4, the head mounted display device 1 can be set to the state for observing the picture by the left eye by mirror-reversing the mounted position. In such a case, the video displayed by the later-described LCD is of course rotated by 180 degrees and the LCD performs display appropriate for observation by the left eye.

An earphone cable 67 and the main cable 66 through which picture signals or audio signals are transmitted extend from the rear end surface of the arm portion 3 of the image display mechanism. The main cable 66 is connected to a video/audio source such as the portable PC 100. An earphone is attached to the earphone cable on the end portion side thereof. This earphone is of a monaural audio type enabling hearing by one ear so that external sounds can be perceived by the other ear.

The structure of the head mounted display device 1 is not restricted to the structure shown in FIGS. 4 and 14. For example, the head mounted display device 4 having the following structure can be considered. A sliding frame which surrounds the tabular member 49 is provided to the arm portion 3 at a position close to the head. The sliding frame can slide along the longitudinal direction of the tabular member 49. As a result, a user can move the arm portion 3 along the tabular member 49. With such a structure, the state of observing by the right eye can be switched to the state of observing by the left eye.

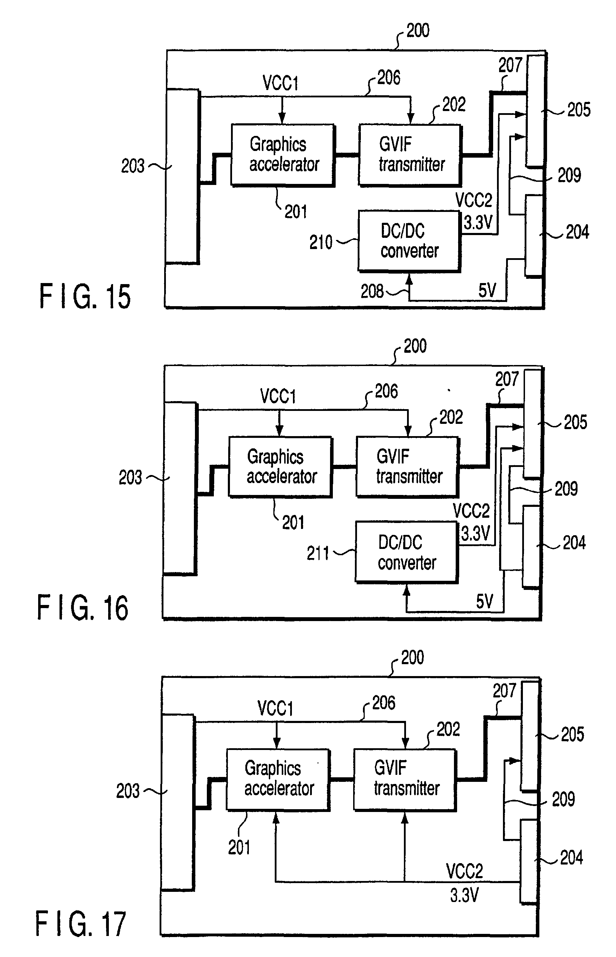

Another example of the PC card 200 will now be described. FIG. 15 is a block diagram showing another example of the PC card 200. As VCC 1, through a connector 203 on the PC card slot side, 5 V or 3.3 V is supplied to a graphics accelerator 201 and a GVIF transmitter 202 which is a signal converter. An output from a bus 207 consisting of a plurality of signal lines and a plurality of power supply lines (3.3 V), power of approximately 3.3 V and 0.5 A which is transmitted through a power supply line (5V) 208 extending from a second connector 204, subjected to voltage conversion from 5 V to 3.3 V by a DC/DC converter 210 as a power converter and used as VCC 2, and a signal inputted through an audio signal line 209 are supplied to the head mounted display device 1 through a first connector 205 and one main cable 66.

According to the embodiment illustrated in FIG. 15, since power, pictures and audio signals can be supplied to the head mounted display device 1 by using one main cable 66 as with the embodiment shown in FIG. 1, the small portable display system with the good wearable property can be realized in the head mounted display system using the PC card as the intelligent interface. Furthermore, since the DC/DC converter as the power converter performs voltage conversion of external power, it is possible to obtain an advantage that a voltage range of the external power can be freely set.

FIG. 16 is a block diagram showing still another example of the PC card 200. A difference from FIGS. 1 and 15 lies in that the 5V power of the external power supply fetched through the second connector 204 is divided into two. One is inputted to the DC/DC converter 211 as the power converter, voltage-converted into 3.3 V, and inputted to the first connector 205. The other one (5V power) is directly inputted to the first connector 205, and a plurality of types of power (5 V and 3.3 V) are therefore supplied to the head mounted display device 1 through the main cable 66.

As for the other structures, the graphics accelerator 201, the GVIF transmitter circuit 202 as a signal converter, the connector 203, the second connector 204, the first connector 205, the power supply line 206, the bus 207 and the audio signal line 209 are similar to those in the examples shown in FIGS. 1 and 15.

In the embodiment shown in FIG. 16, in addition to advantages of FIG. 1, a plurality of types of power can be supplied, thereby increasing the degree of freedom in design.

FIG. 17 is a block diagram showing still another example of the PC card 200. In FIG. 17, a difference from the above-described embodiment is that the method for supplying power to the head mounted display device 1 is different. That is, as VCC 1, from the PC card slot side through the connector 203, 5 V or 3.3 V is supplied to the graphics accelerator 201 and the GVIF transmitter circuit 202 as a signal converter. Furthermore, with the external power (3.3 V) being determined as VCC 2, it is also supplied to the graphics accelerator 201 and the GVIF transmitter circuit 202.

It is to be noted that reference numerals equal to those of other embodiments denote like or corresponding parts, thereby omitting their explanation.

In the embodiment shown in FIG. 17, since power can be supplied to the head mounted display device 1 through the device in the PC card 200, there is an advantage that the power saving mode of the head mounted display device 1 can be controlled by controlling the device from the PC 100 side.

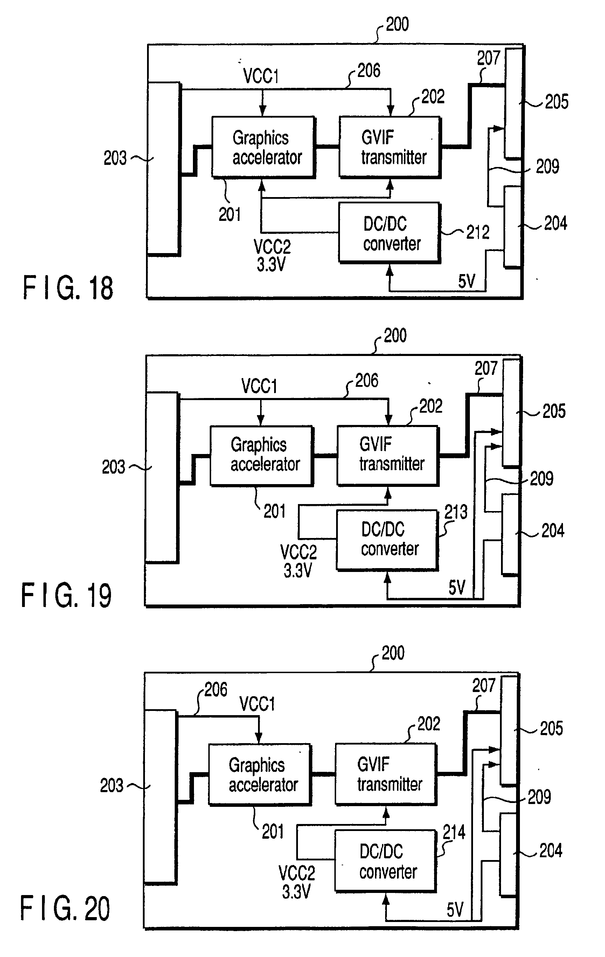

FIG. 18 is a block diagram showing yet another example of the PC card 200. In the FIG. 17 embodiment, In the FIG. 18, 5 V inputted to the DC/DC converter 212 as a power converter, in place of the external power 5 V in the FIG. 17, and the voltage is converted, and 3.3 V is outputted, and the output of 3.3 V is supplied to the graphics accelerator 201 and the GVIF transmitter circuit 202 as a signal converter.

In the embodiment illustrated in FIG. 18, there can be obtained an advantage that a voltage range of external power can be freely set in addition to the advantage of FIG. 17.

FIG. 19 is a block diagram showing a further example of the PC card 200. In the example of FIG. 18, the power of 5 V fetched from the second connector 204 is supplied to the first connector 205. The power of 5 V is voltage-converted into power of 3.3 V by the DC/DC converter 213 as a power converter and supplied to the GVIF transmitter 202 as a signal converter as a part in the PC card 200, as the power of 3.3 V.

In the embodiment illustrated in FIG. 19, there is an advantage that a plurality of head mounted display devices 1 having different power supply voltages can be selectively connected by controlling the elements from the PC 100 side.

FIG. 20 is a block diagram showing a still further example of the PC card 200. In the example of FIG. 20, power of 5 V fetched from the second connector 204 is supplied to the first connector 205. The power of 5 V is voltage-converted by the DC/DC converter 214 as a power converter, and independently supplied to the GVIF transmitter 202 as a signal converter which is a part in the PC card 200, as power of 3.3 V (VCC 2). Supply of power to the graphics accelerator 201 is carried out by the power supply line as VCC 1. Power of 5 V or 3.3 V is supplied.

In the embodiment illustrated in FIG. 20, besides the advantage of FIG. 19, there is an advantage that the load of the power supply on the card bus controller 109 side can be reduced.

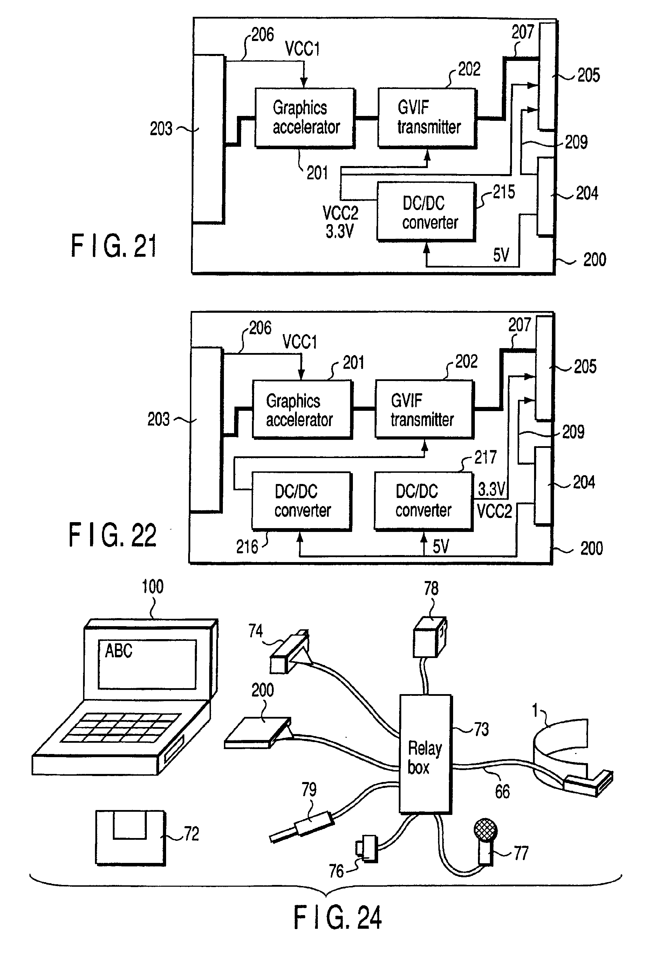

FIG. 21 is a block diagram showing a yet further example of the PC card 200. In the FIG. 21 example, power of 5 V fetched from the second connector 204 is voltage-converted by the DC/DC converter 215 as a power converter, and supplied to the GVIF transmitter 202 as a signal converter which is a part in the PC card 200, as power of 3.3 V (VCC 2). Simultaneously, power of 3.3 V is supplied to the first connector 205. As supply of power to the graphics accelerator 201, 5 V or 3.3 V is supplied as VCC 1 through the power supply line 206.

The embodiment of FIG. 21 has an advantage that only a part of the head mounted display device 1 can enter the power saving mode.

FIG. 22 is a block diagram showing another example of the PC card 200. In the example of FIG. 22, power of 5 V fetched from the second connector 204 is divided and inputted to two DC/DC converters 216 and 217 as power converters. The power inputted to the DC/DC converter 216 is converted and supplied to the GVIF transmitter circuit 202 as a signal converter which is a part in the PC card 200, as power of 3.3 V. On the other hand, the power inputted to the DC/DC converter 217 is voltage-converted and supplied to the first connector 205 as power of 3.3 V (VCC 2). Moreover, supply of power to the graphics accelerator 201 is carried out as VCC 1 through the power supply line 206. 5 V or 3.3 V is applied.

The example of FIG. 22 has an advantage that constituent parts can be reduced in size by preparing a plurality of the DC/DC converters.

Although signals for a liquid crystal display are transmitted by utilizing GVIF which is a digital signal format as a signal format for the liquid crystal display in the first embodiment, the present invention is not restricted thereto, and TMDS or LVDS may be utilized for example. In addition, an analog signal format may be employed.

Although the intelligent interface in the first embodiment is the PC card 200, the present invention is not restricted thereto. For example, any type of intelligent interface can be used as long as it is an intelligent card which is used in combination with a PC, such as a memory stick, an SD card, a small PC card or the like used in a PC memory or an ultra-small assembled device.

Additionally, although the portable PC 100 is used as the information processing unit in the foregoing embodiments, the present invention is not restricted thereto. For example, it may be a portable phone or a PDA (personal digital assistant).

Further, in the head mounted display device 1 according to the first and second embodiments, the LCD 13, the LED board 17, the LCD drive circuit and the illumination prism 28 are provided in the frame 10 having the closed structure in the viewer portion 2. However, in place of providing all of these members in the closed structure, only the LCD 13 and the LED board 17 may be provided, for example. Alternatively, the LCD 13, the LED board 17 and the LCD drive circuit may be provided. A combination of these members to be provided in the frame 10 having the closed structure may be appropriately determined in accordance with the structure of the circuit board, the level of necessary water proofing or dust proofing, or the like.

Further, although the tabular member 49 of the support mechanism 4 is configured to be put so as to extend over the top of the head in the first and second embodiments, the present invention is not restricted thereto. For example, it can be configured to extend from both ears to the back of the head. Furthermore, the number of tabular member 49 is not restricted to one. For example, two tabular members 49 may be employed so that one tabular member 49 protrudes so as to extend from both ears to the top of the head while the other tabular member 49 protrudes so as to extend from both ears to the back of the head.

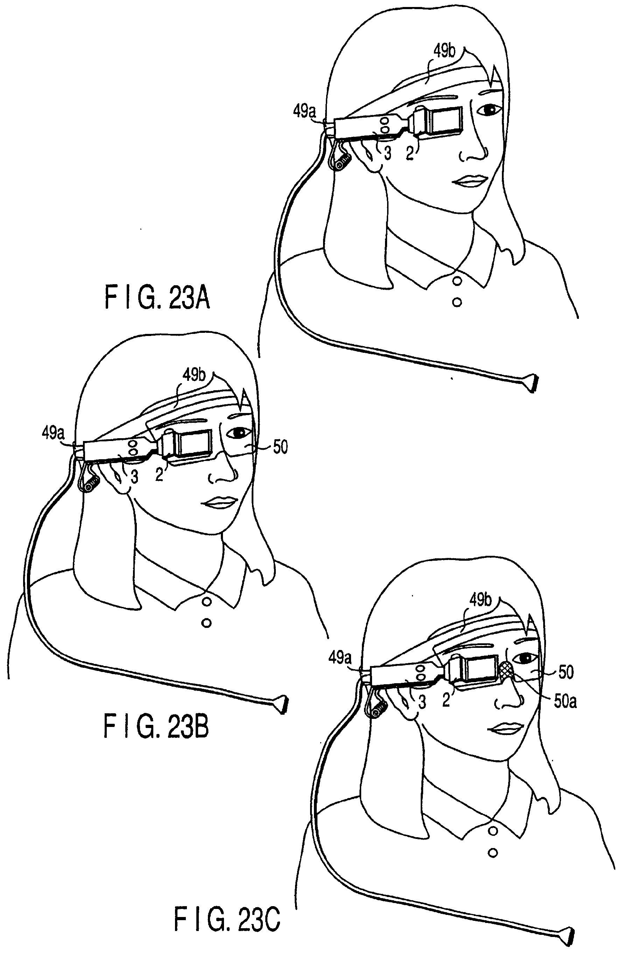

Moreover, in the additional example of the head mounted display device 1 described in connection with FIG. 14, the support mechanism has the tabular member 49a which extends from the vicinity of both ears to the back of the head. However, the present invention is not restricted thereto. For example, as shown in FIG. 23A, it may further have a tabular member 49b which extends from the vicinity of both ears to the forehead. In addition, the support mechanism may have a shield member 50 which is positioned between the viewer portion 2 and eyes and arranged so as to cover both eyes of a user as shown in FIG. 23B. Additionally, the support mechanism may have a nose cover member 50a which is fixed to the shield member 50 or the tabular member 49b as shown in FIG. 23C.

Further, in the additional example of the head mounted display device 1 described with reference to FIG. 4, through holes communicating with the outside may be formed to the ear cover portions 46 and 47 so that a user can hear sounds from the outside when he/she wears the head mounted display device 1 with the ear cover portions being appressed against his/her ears. Furthermore, earphones may be set to the ear cover portions 46 and 47 so that a user can hear sound from the earphones as well as external sound. Alternatively, the ear cover portions 46 and 47 to which the earphones are provided may have the closed structure so that a user can hear only sound from the earphones.

As described above, in order to switch the position for observation by one eye to the position for observation by the other eye, it is preferable to also rotate the display screen by approximately 180 degrees (display screen rotation operation) when the arm portion 3 is swiveled by approximately 180 degrees.

As to the operation for rotating the display screen by approximately 180 degrees for example, therefore, an appropriate sensor provided to the circuit board built in the arm portion 3 and/or the LCD frame portion 5 may be used to detect the swiveling operation of the arm portion 3 so that an image suitable for the state for observation by the left eye can be displayed in the LCD. Further, an appropriate sensor may be used to detect the swiveling operation of the arm portion 3, a signal from this sensor may be transmitted to the portable PC 100, and the portable PC 100 may output an image signal suitable for the state for observation by a selected eye. As described above, a user does not have to perform any special operation for the display screen rotation operation by the automatic switching according to swiveling of the arm portion. As an appropriate sensor which detects the swiveling operation of the arm portion 3, it may be a mechanical switch which is set between the arm portion 3 and the support mechanism 4 and recognizes whether the state is for observation by the right eye or by the left eye. Furthermore, appropriate conductors may be set to the arm portion 3 and the support mechanism 4 in order to monitor the electric current flowing between both conductors. In such a case, the appropriate sensor may be a switch which recognizes each state by utilizing the fact that conduction or non-conduction is established in accordance with each state. Moreover, a sensor which senses the earth magnetism may be fixed to the arm portion 3 and/or the LCD frame portion 5 at a predetermined position in a predetermined direction, and it is possible to employ a switch which recognizes which direction the viewer portion 2 faces with respect to the horizontal line by sensing the direction of the viewer portion 2 with respect to the earth magnetism. As a result, an image appropriate for a user can be displayed taking the direction of the head with respect to the horizontal line into consideration irrespective of both states. In addition, it is possible to use a switch which detects a position of the arm portion 3 with respect to the support mechanism 4 by fixing a magnet to one of the arm portion 3 and the support mechanism 4 at a predetermined position in a predetermined direction and fixing a sensor which senses the magnetism to the other one at a predetermined position in a predetermined direction.

As to the operation for rotating the display screen by approximately 180 degrees, in place of providing the sensor described above, the circuit board included in the arm portion 3 and/or the LCD frame portion 5 may be configured to display an image appropriate for observation by the left eye by adequately operating the switch 26 in the main circuit board 20 which is pressed by a button member 65 provided to the arm portion 3.

Additionally, in regard to the operation for rotating the display screen by approximately 180 degrees, by appropriately operating the switch 26 in the main circuit board 20 pressed by the button member 65 provided to the arm portion 3, a predetermined signal may be transmitted to the portable PC 100, and the portable PC 100 may output an image signal appropriate for the state for observation by the left eye.

As described above, in the case of respectively providing the earphones to the ear cover portions 46 and 47, it is also preferable for audio signals having signals inherent to right and left such as stereo sound or 3D surround that right and left signals are counterchanged in accordance with switching from the state for observation by one eye to the state for observation by the other eye.

In cases where a user wears the head mounted display device 1 with the arm portion 3 being placed at a first position Pr or a second position P1, if the image signal and the audio signal are not inputted to the head mounted display device 1 for a predetermined period of time, if the image signal is not inputted but the audio signal is inputted for a predetermined period of time, or if the tabular member 49 which elastically presses the ear cover portions 46 and 47 is expanded, the arm portion 3 may automatically swivel to a central position Pc by using a spring or a motor provided at an appropriate joint which connects the arum portion 3 and the support mechanism 4 so as to be capable of swiveling, and/or the viewer portion 2 may automatically swivel so as to move away from the head by using a spring or a motor provided to an appropriate joint which connects the viewer portion 2 and the arm portion 3 so as to be capable of swiveling. As a result, when a user does not require a picture from the head mounted display device 1, a field of vision from the external world cannot be intercepted. When external force is accidentally applied, the viewer portion 2 cannot put pressure on the face of a user, and the head mounted display device 1 can be prevented from being damaged. Further, since a sufficient space can be assured in front of the head, operations can be comfortably performed.

When the arm portion 3 is placed at the central position Pc and/or the viewer portion 2 is placed at a position to which it is swiveled around the arm portion 3 so as to move away from the head, it is preferable that power is not supplied to the device which requests power concerning image display of the head mounted display device 1. Furthermore, at the same time, power may or may not by supplied to the elements which requests power concerning sound of the head mounted display device 1. That is because an image from the head mounted display device 1 does not have to be observed, and this is prevention against accidental consumption of power when a user performs the operation for moving the viewer portion 2 away from the field of vision in order to secure user's view and then forgets to shut off the power.

In cases where the arm portion 3 is placed at the central position Pc and/or the viewer portion 2 is placed at a position to which it is swiveled around the arm portion 3 away from the head, when the image signal is inputted to the head mounted display device 1, the viewer portion 2 may automatically project to a position in front of an eye by using a motor or the like so that a user can observe an image from the head mounted display device 1.

Moreover, in cases where the arm portion 3 is placed at the central position Pc and/or the viewer portion 2 is placed at a position to which it is swiveled around the arm portion 3 away from the head, when the image signal is inputted in elements such that power is supplied to the elements requesting power concerning sound of the head mounted display device 1, a user may be given an audio message informing of input of the image signal and the viewer portion 2 may be manually set in front of an eye.

In addition, a first sensor which monitors the intensity or the like of a part of the light directing from the LED 16 to the LCD 13 may be arranged at a predetermined position. Additionally, a second sensor which monitors the intensity or the like of a part of the light directing from the LCD 13 to the main prism 32 may be arranged at a predetermined position. When at least one of the first and second sensors is arranged, the intensity and the wavelength of each color, i.e., R, G and B sequentially outgoing from the LED 16 can be controlled. Consequently, a clear image can be created. Further, deterioration of the LED with time can be monitored.

A second embodiment of the head mounted display system will now be described with reference to FIG. 24. A difference from the head mounted display system according to the first embodiment lies in that the head mounted display device 1 and the portable PC 100 are connected to each other through a relay box 73 which is wearable.

In this structure, the main cable 66 extending from the head mounted display device 1 can be connected to the relay box 73, and an input terminal of the relay box can be connected via a predetermined cable to a connector 74 (a USB connector and/or a PS/2 connector) connected to a predetermined connector of the portable PC 100. Furthermore, to the relay box 73 can be connected a PC card 75 inserted into a predetermined slot of the portable PC 100, an earphone 76, a microphone 77, an AC adaptor 78 for supplying power and a terminal 79, through predetermined cables, respectively. The PC card 200 and the relay box 73 constitute an intelligent interface.

To the portable PC 100 is installed a device driver 72 which controls VGA of the portable PC 100 main body or turns off the voltage of the display panel when it recognizes the PC card 200. It is to be noted that the relay box 73 may include a battery which supplies power.

In such connection, an image signal and power can be respectively supplied to the head mounted display device 1 by the PC card 200. Moreover, the image signal can be supplied to the head mounted display device 1 from the PC card 200, and power can be supplied to the same from the AC adaptor 78 or the battery. Moreover, the image signal can be supplied from the PC card 200, and power can be supplied from the connector 74. In addition, the image signal and power can be supplied from the PC card 200, and an audio signal can be supplied from a USB connector used as the connector 74. Additionally, the image signal can be supplied from the PC card 200, power can be supplied from the connector 74 and the audio signal can be supplied from terminal 76 which can be connected to a microphone jack or a speaker jack of the portable PC 100, through the relay box 73, respectively. As described above, the path along which the signal is transmitted and the path along which power is transmitted can be constituted in many ways.

By establishing connection and using the device in this manner, the head mounted display device 1 can utilize the image signal and the audio signal with the excellent multiusability, as describing one example hereinafter. The relay box 73 can receive a digital image signal such that may have various signal formats (TMDS, LVDS, GVIF) for liquid displays as described above, from the PC card 200, convert the received signal and output so that the converted signal can be processed in the head mounted display device 1. Further, the relay box 73 can convert the inputted digital signal into an analog signal and output the obtained signal. That is, the relay box 73 is positioned substantially between the portable PC 100 and the head mounted display device 1 and supports the head mounted display device 1 so that it can process many kinds of signals.

The relay box 73 can have a memory function with a built-in memory, and can use a small memory having a detachable function. When performing a specific operation or the like, the procedure of this operation may be recorded in this built-in memory or a detachable information storage medium so that the operation can be carried out while appropriately making reference. Furthermore, personal information may be recorded in order to provide specific information to each individual.

Only the relay box 73 including the battery therein so as to be suitable for portability and the head mounted display device 1 may be connected to each other without using the portable PC 100 and the PC card 200. In the case of using the portable PC 100, the portable PC 100 is placed at a predetermined position, and a user can move only in a range to which the main cable can reach from that position. In the case of using only the relay box 73 as described above, however, since a user can wear all constituent elements, the degree of freedom necessary for the operation requiring movement can be assured without having to worry about handling of cables.

### Industrial Applicability

The head mounted display system according to the present invention is used as a display device for displaying an image obtained from an office automation device such as a personal computer or a word processor. Furthermore, in a factory, it is effective for applications where operations are carried out while displaying necessary information in a field of vision.

## Claims

1. A head mounted display system comprising an information processing unit (100) and a head mounted display device (1), **characterized in that**
the head mounted display system includes at least one of a signal converter (202) and a power converter (210, 211, 212, 213, 214, 215, 216, 217), and
the head mounted display system further comprises an intelligent interface (200, 73) which connects the information processing unit (100) and the head mounted display device (1) to each other.

2. The head mounted display system according to claim 1, **characterized in that** at least one path along which a signal is transmitted and at least one path along which power is transmitted are connected to the intelligent interface (200, 73), and
the path along which a signal is transmitted and which connects the intelligent interface (200, 73) and the head mounted display device (1) to each other, and the path along which power is transmitted and which connects the intelligent interface (200, 73) and the head mounted display device (1) to each other are constituted by one main cable (66).

3. The head mounted display system according to claim 2, **characterized in that** the path along which a signal is transmitted and which connects the intelligent interface (200, 73) and the information processing unit (1) to each other, and the path along which power is transmitted and which connects the intelligent interface (200, 73) and the information processing unit (1) to each other are connected to the bus controller (1022) of said information processing unit (100).

4. The head mounted display device according to claim 3, **characterized in that** the intelligent interface (200, 73) is a PC card (200) including a first connector (205) to which a main cable (66) is connected, and a second connector (204) to which the path along which a signal is transmitted and the path along which power is transmitted are connected, and
the information processing unit (100) includes a PC card slot (110) to which the PC card (200) is inserted.

5. The head mounted display system according to claim 4, **characterized in that** the PC card (200) is supplied with at least one of power and a signal through the second connector (204).

6. The head mounted display system according to claim 4, **characterized in that** both the head mounted display device (1) and the PC card (200) is supplied with at least one of power and a signal, from the outside of the PC card (200), through the second connector (204).

7. The head mounted display system according to claim 4, **characterized in that** the second connector (204) is connected to one of a USB connector (113), a PS/2 connector (115) and an IEEE1394 connector (114).

8. The head mounted display system according to claim 1, **characterized in that** the head mounted display device (1) includes
an image display mechanism (2, 3) and
a support mechanism (4) which supports the image display mechanism (2, 3) and can be put on the head of a user, and
when the support mechanism (4) is.put on the head, the image display mechanism (2, 3) corresponds to only one eye of the user and an image display light emitted by the image display mechanism (2, 3) is led to the eye, and
said image display mechanism (2, 3) is supported by said support mechanism so as to be capable of swiveling, so that said image display mechanism (2, 3) can selectively take a position corresponding to one eye of the user and a position corresponding to the other eye when said support mechanism (4) is put on the head of the user.

9. The head mounted display system according to claim 1, **characterized in that** the head mounted display system includes
an image display mechanism (2, 3) including a viewer portion (2) which emits image display light and an arm portion (3) which supports the viewer portion (2) on one end side of the an arm portion (3), and
a support mechanism (4) which supports the arm portion (3) on the other end side of the arm portion (3) and can be put on the head of a user,
the arm portion (3) being supported by the support mechanism (4) so as to be capable of swiveling among a central position (Pc), a first position (Pr) swiveled from the central position (Pc) by approximately 90° and a second position (P1) swiveled from the central position (Pc) by approximately -90°,
when the support mechanism (4) being put on the head of a user, the viewer portion (2) corresponding to one eye of the user at the first position (Pr) and the viewer portion (2) corresponding to the other eye at the second position (P1).

10. The head mounted display system according to claim 9, **characterized in that** the support mechanism (4) includes
a tabular member (49) having a shape corresponding to a shape of the head on which the support mechanism (4) is put,
a first ear cover portion (46) provided at one end of the tabular member (49), and
a second ear cover portion (47) provided at the other end of the tabular member (49), and
the image display mechanism (2, 3) is supported by the first ear cover portion (46) so as to be capable of swiveling.

11. The head mounted display system according to claim 9, **characterized in that** said image display mechanism (2, 3) includes a mechanism which automatically rotates an image to be displayed by 180° in response to swiveling of said image display mechanism (2, 3).
